# EUROPÄISCHE PATENTSCHRIFT

(11) **EP 0 696 942 B1**
(45) Veröffentlichungstag und Bekanntmachung des Hinweises auf die Patenterteilung: **21.01.1998**
(21) Anmeldenummer: 94913497.7
(22) Anmeldetag: 03.05.1994
(51) Int. Cl.: B23B 27/14

(54) **VIELECKIGER SCHNEIDEINSATZ**
POLYGONAL CUTTING INSERT
PLAQUETTE DE COUPE POLYGONALE

(30) Priorität: 05.05.1993 DE 4314570
(43) Veröffentlichungstag der Anmeldung: 21.02.1996
(73) Patentinhaber: Widia GmbH, 45145 Essen (DE)
(72) Erfinder: AGUSTIN PAYA, José, D-45479 Mülheim (DE)
(74) Vertreter: Vomberg, Friedhelm, Dipl.-Phys.
(86) Internationale Anmeldenummer: DE9400507
(87) Internationale Veröffentlichungsnummer: WO9425208

(56) Entgegenhaltungen:
- EP-A- 0 418 619
- DE-A- 2 231 631

## Beschreibung

Die Erfindung betrifft einen vieleckigen Schneideinsatz zur spanbildenden Bearbeitung, dessen mindestens einseitige Deckfläche die Spanfläche und dessen umlaufende Seitenflächen die Freiflächen bilden, wobei die Spanfläche einen zentralen, gegenüber der durch Schneidkanten definierten Ebene oder gegenüber einer sich an die Schneidkante anschließenden ggf. darin angeordnete einzelne Erhebungen aufweisende Spanbrechernut erhabenen Spanbrecher besitzt, der in Form mindestens einer keilförmigen im Spanablaufbereich angeordneten Längsrippe ausläuft, nach WO-A-93/08944.

Die aus der DE 41 36 417 A1 bekannten schneideinsätze können bei Fertigung auf pulvermetallurgischem Weg ohne Ausschuß hergestellt werden. Der Schneideinsatz zeigt bei der Werkstückbearbeitung einen geringen Druck in den Schneidecken und gleichzeitig eine gute Wärmeabfuhr. In der EP 0 208 668 B1 wird zur Verformung des ablaufenden Spanes in drei Stufen zur Minimierung der Schneidkraft ein Schneideinsatz vorgeschlagen, der im Anschluß an die Schneidkante eine Fase und eine sich hieran anschließende Spanbrechernut aufweist, wobei eine Mehrzahl von parallel zur Schneidkante in Reihe angeordneten Einsenkungen oder Aussparungen vorgesehen ist, die zumindest teilweise in der Spanbrechernut angeordnet sind, die einen Krümmungsradius von weniger als 2 mm aufweist.

Es ist Aufgabe der vorliegenden Erfindung, den eingangs genannten Schneideinsatz für die Zerspanungsvorgänge zu verbessern, bei denen sich die Zerspanungsrichtung häufig ändert, wie beispielsweise beim Kopierdrehen. Aufgabengemäß soll in allen Werkstückbereichen ein guter Spanbruch erzeugt werden und die Entstehung von Langspänen verhindert werden.

Diese Aufgabe wird durch den vieleckigen Schneideinsatz nach Anspruch 1 gelöst, der erfindungsgemäß dadurch gekennzeichnet ist, daß zwischen und/oder seitlich der Längsrippen muldenförmige Vertiefungen und/oder erhabene Spanformelemente vorgesehen sind, wobei die Vertiefungen eine Tiefe von 0,05 mm bis 0,4 mm aufweisen und eine Länge in einer Senkrechten zur Schneidkante gemessen, die 1/2 bis 3mal so groß wie die Breite der Vertiefungen ist, und die Höhe der erhabenen Spanformelemente 0,08 mm bis 0,3 mm beträgt und der Abstand der erhabenen Spanformelemente von der Schneidkante mindestens so groß wie deren Höhe ist. Der Schneideinsatz ist besonders für schwer zerspanbare zähe metallische Werkstoffe, wie z.B. Chrom-Nickel-Stähle, verwendbar. Der Schneideinsatz kann aus Hartmetall oder einem Cermet bestehen. Die Spanführung und Wärmeabfuhr in den Schneidecken ist erheblich verbessert.

Weiterbildungen der Erfindung sind in den Unteransprüchen 2 bis 10 beschrieben.

Bevorzugt werden die Schneideinsätze entweder mit muldenförmigen Vertiefungen oder erhabenen Spanformelementen der nachfolgend beschrieben Art ausgerüstet.

Die muldenförmigen Vertiefungen liegen vorzugsweise spiegelsymmetrisch zu einer Schneideckenwinkelhalbierenden, können jedoch auch asymmetrisch angeordnet sein.

Nach einer besonderen Ausgestaltung der Erfindung mündet in die Vertiefungen jeweils eine Längsrippe. Die Vertiefungen besitzen vorzugsweise eine Tiefe von 0,05 mm bis 0,4 mm. Ist eine Fase vorgesehen, die vorzugsweise negativ ist, so können die Vertiefungen diese und einen sich hieran anschließenden Spanbrecher überlappen. Dieser Spanbrecher kann selbst eine Spanbrechernut oder ein erhabenes Spanflächenteil als Verbindungsstücke zu einem mittleren Spanflächenplateau als Spanbrecher sein. Nach einer Alternative, d.h., bei Schneideinsätzen ohne Fase, reichen die Vertiefungen weiter und durchbrechen die Schneidkante. Die Länge der Vertiefungen, in einer Senkrechten zur Schneidkante gemessen, ist 1/2 bis 3mal so groß wie deren Breite, wobei die Vertiefungen bevorzugt über ihre gesamte Breite mit ihrer vorderen Grenzkante parallel zu der Schneidkante angeordnet sind.

Nach einer bevorzugten Ausführungsform sind vom Spanbrecher zu den Schneidecken gegenüber dem Spanbrecher leicht abfallende, aber gegenüber der hieran angrenzenden parallel zur Schneidkante laufenden Nut erhabene Spanflächenstücke vorgesehen, in denen die Längsrippen und die Vertiefungen oder Erhebungen angeordnet sind. Bevorzugt ist die Breite der Vertiefungen 1/2 bis 3mal so groß wie der Abstand der Vertiefungen zur auf die Spanbrechernut abfallenden Flanke.

Zwei muldenförmige Vertiefungen pro Schneidecke haben sich als optimal erwiesen.

Die erhabenen Spanformelemente sind vorzugsweise tropfenförmig ausgebildet und besitzen insbesondere auf die Schneidkante gerichtete Spitzen. Die Höhe der Spanformelemente beträgt 0,1 mm bis 0,3 mm, vorzugsweise 0,1 mm bis 0,2 mm oder 0,08 mm bis 0,12 mm je nach zu bearbeitendem Werkstoff. Der Abstand der Spanformelemente ist mindestens so groß wie deren Höhe und beträgt absolut vorzugsweise 0,05 mm bis 1,5 mm, insbesondere 0,05 mm bis 0,5 mm. Die Breite der Spanformelemente wird bevorzugt zwischen 0,2 mm und 1,5 mm gewählt. Der Schneideinsatz kann eine Fase besitzen, die vorzugsweise negativ ist. Der Freiwinkel beträgt nach einer konkreten Ausführungsform der Erfindung 0°.

Ausführungsbeispiele der Erfindung sind in den Zeichnungen dargestellt. Es zeigen
- Fig. 1a bis c: Seitenansichten verschiedener Schneideinsätze,
- Fig. 2 bis 5: Teilansichten unterschiedlicher Schneidkantenausbildungen,
- Fig. 6: eine Teildraufsicht auf eine erste erfindungsgemäße Ausführungsform des Schneideinsatzes,
- Fig. 7: einen Schnitt längs der Linie VII - VII,
- Fig. 8: eine weitere Ausführungsform eines Schneideinsatzes in einer Teildraufsicht,
- Fig. 9: eine Schnittansicht längs der Linie IX - IX,
- Fig. 10: eine weitere Ausführungsform in einer Teildraufsicht und
- Fig. 11 und 12: unterschiedliche Ausführungsformen entlang des Schnittes XI - XI.

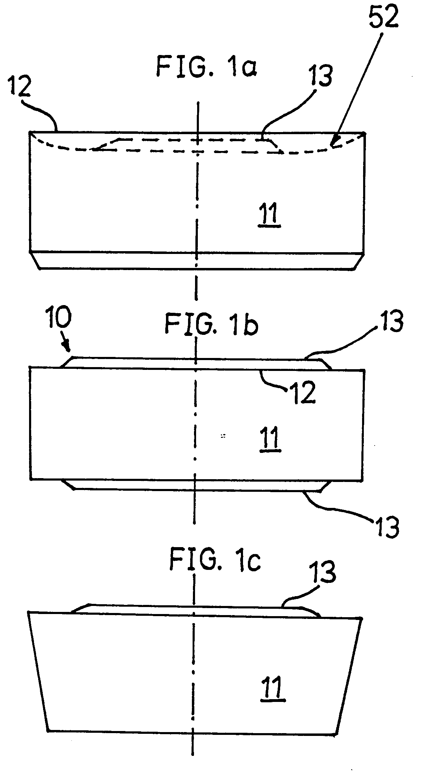

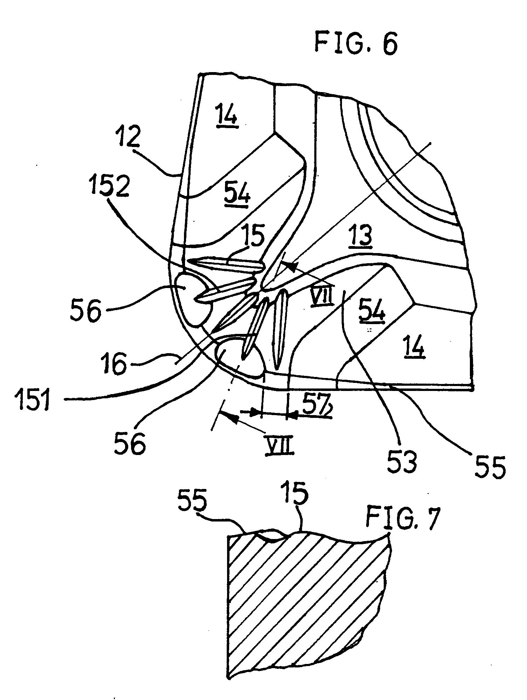

Mit Ausnahme der muldenförmigen Vertiefungen und/oder Erhebungen zwischen den Längsrippen sind die Schneideinsätze bereits in den Fig. 1 bis 11d der DE-A1-41 36 417 abgebildet bzw. beschrieben, worauf Bezug genommen wird (Hauptpatent). Die betreffenden Bezugszeichen dieser Abbildungen werden auch in den Zeichnungen der vorliegenden Anmeldung verwendet. Die Schneideinsätze, die nach Fig. 1a bis c mit Blick auf die Freifläche 11 dargestellt sind, besitzen einen zentralen Spanbrecher 13, der gegenüber der Schneidkante 12 abgesenkt sein kann, wobei sich abfallende Flanke 52 an die Schneidkante 12 anschließt. Wie aus Fig. 1b ersichtlich, kann das erhabene Mittelteil 13 auch oberhalb der gemeinsamen Schneidkante angeordnet sein. Der Schneideinsatz nach Fig. 1b ist als Wendeschneidplatte beidseitig verwendbar. Während die Schneideinsätze nach Fig. 1a und 1b einen 0°-Freiwinkel aufweisen, ist die Freifläche 11 bei dem Schneideinsatz nach Fig. 1c unter einem positiven Freiwinkel geneigt, der etwa zwischen 5° und 30° liegt.

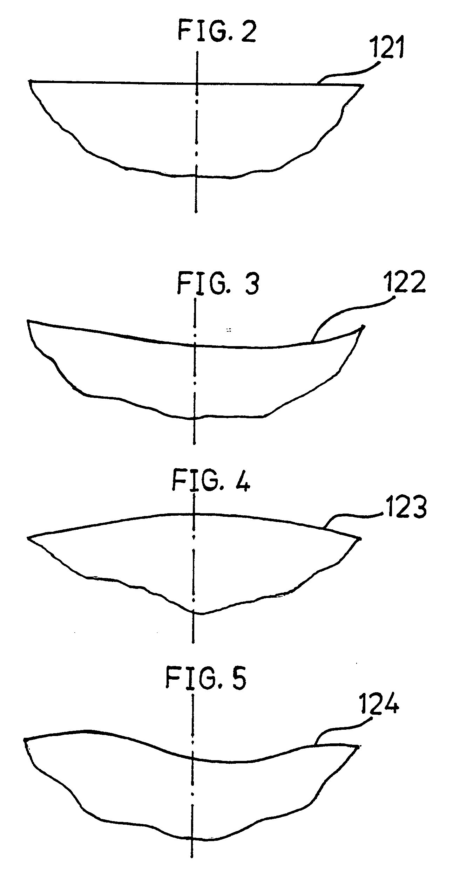

Die Schneidkante 12 kann entsprechend Fig. 2 bis 5 gerade 121, konkav 122, konvex 123 oder wellig 124 ausgebildet sein.

Aus Fig. 6 ist ersichtlich, daß der Spanbrecher 13 zum Schneideckenbereich hin in Form von fünf Längsrippen 15 ausläuft, die symmetrisch zu einer Schneidkantenwinkelhalbierenden 16 angeordnet sind. Gegenüber dem zentralen Spanbrecher 13 liegt zur Schneidecke hin leicht abfallend, aber gegenüber der hieran angrenzenden parallel zur Schneidkante 12 laufenden Nut 14 erhabenes Spanflächenstück 53, das eine zur Spannut 14 abfallende Flanke 54 aufweist. Der Schneideinsatz ist mit einer Fase 55 versehen, die sich im Schneideckenbereich verbreitert. Das Spanflächenstück 53 erfährt ebenfalls zur Schneidecke hin eine Verbreiterung. Spiegelsymmetrisch zu einer Schneideckenhalbierenden 16 liegen zwei muldenförmige Vertiefungen 56, die im vorliegenden Fall im schneidkantenabgewandten Bereich eine etwa kreisförmige Kontur und im schneidkantennahen Bereich eine Kante aufweisen, die parallel zur Schneidkante verläuft. In die Vertiefungen 56 ragen zwei Längsrippen 151 bzw. 152 mit ihren vorderen Spitzen. Diese Längsrippen 151 und 152 liegen ebenfalls symmetrisch zur Schneideckenwinkelhalbierenden 16. Die parallel zur Schneidkante 12 gemessene Breite der muldenförmigen Vertiefungen 56 ist 0,5 bis 3mal größer als der Abstand 57 des Vertiefungsrandes zur oberen Kante der abfallenden Flanke 55. Die Tiefe der Mulden 56 liegt zwischen 0,05 mm bis 0,4 mm, während die zu einer Schneidkantennormalen gemessene Länge der muldenförmigen Vertiefung etwa 0,5 bis 3mal so groß wie deren Breite ist. Im vorliegenden Fall überlappt die Vertiefung 56 jeweils die Fase bzw. reicht in die Fase 55 hinein und den anschließenden leicht abfallenden Bereich. Wie aus Fig. 6 und 7 ersichtlich, grenzen die Längsrippen etwa bis in Höhe der Fase an.

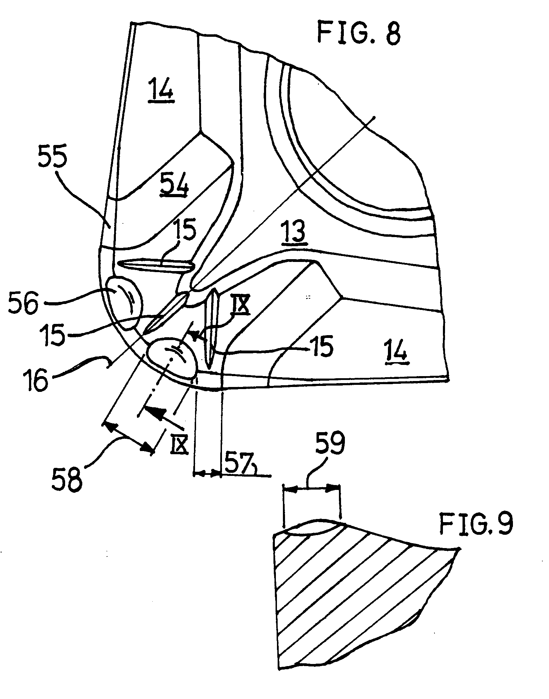

Eine weitere Ausführungsform nach Fig. 8 besitzt nur drei Längsrippen 15, von denen zwei spiegelsymmetrisch zur Schneideckenwinkelhalbierenden 16 und die dritte in Richtung dieser Schneidkantenwinkelhalbierenden 16 angeordnet sind. Jede der Ausnehmungen 56 liegt zwischen zwei Längsrippen 15. Für die Breite 58 der Vertiefung 56 und deren Länge 59 gilt Entsprechendes wie oben ausgeführt.

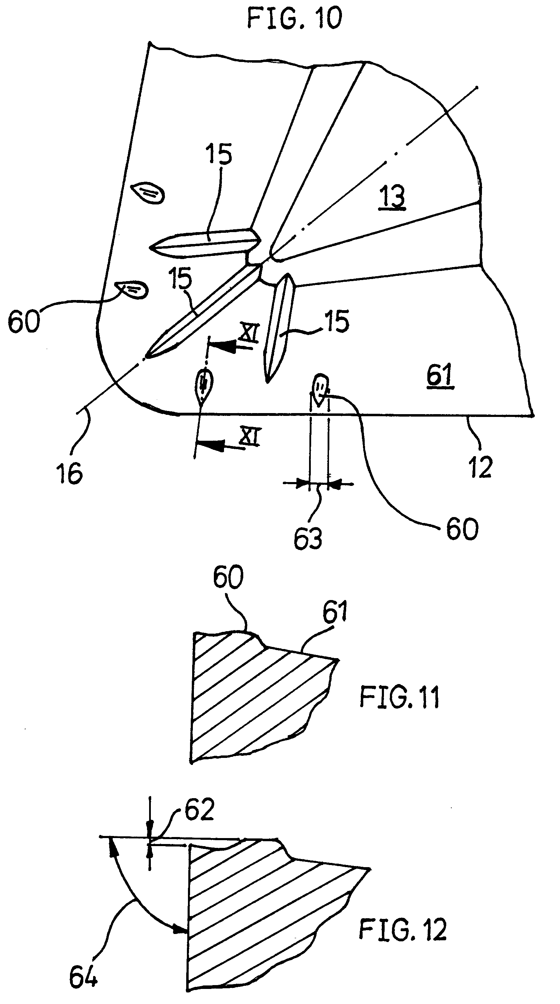

In der Ausführungsform nach Fig. 10 sind jeweils zwischen zwei Längsrippen bzw. neben den äußeren Längsrippen 15 erhabene tropfenförmige Spanformelemente 60 im Abstand zu Schneidkante 12 angeordnet. Die erhabenen Spanformelemente 60 sind spiegelsymmetrisch zur Schneideckenwinkelhalbierenden 16 angeordnet. Der Schneideinsatz besitzt angrenzend an die Schneidkante 12 eine bis zum Spanbrecher 13 abfallende Flanke 61. Der Abstand der Spanformelemente 60 von der Schneidkante liegt zwischen 0,05 mm und 1,5 mm, deren Höhe 62 (vgl. Fig. 12) beträgt 0,02 mm bis 0,3 mm, vorzugsweise um 0,1 mm. Diese erhabenen Elemente besitzen einen Mindestabstand zum nächstliegenden Element bzw. zu einer Rippe 15, der mindestens dreimal der genannten Höhe h beträgt. Die Breite 63 der erhabenen Elemente liegt zwischen 0,2 mm bis 1,5 mm, wobei deren Länge in einer Senkrechten zur Schneidkantennormalen gemessen abhängig vom Platzverhältnis ist. Der Winkel 64 kann 90° bis 120° betragen, d.h., der Freiwinkel kann bis zu 30° werden.

Schneideinsätze der Sorte CNMM sind zum Drehen von Radsätzen für den Schienenverkehr getestet worden. In einem ersten Versuch sind bereits gelaufene Räder trocken bearbeitet worden, die sich in unterschiedlichem Zustand befanden. Hierbei war zu berücksichtigen, daß unterschiedliche Kaltverfestigungen der Profiloberfläche, Profilverformungen und durch Bremsmanöver verursachte Laufflächenabflachungen vorlagen. Bei diesen Rädern betrug die Schnittiefe 1,5 bis 4 mm, der Vorschub 0,5 bis 0,7 mm/U und die Drehgeschwindigkeit 50 bis 70 m/min. Bei einer Eingriffszeit pro Überlauf von 5 bis 7 Minuten konnten die erfindungsgemäßen Schneideinsätze Standzeiten von 45 Minuten pro Schneidkante im Durchschnitt erreichen. Im wesentlichen konnten die Spanformen entsprechend der Klassifizierung nach INFOS (Informationszentrale für Schnittwerte, TH Aachen) in die Klasse 6, 7 und 8, d.h., zu kurzen zylindrischen Wendelspänen, Spiralwendelspänen und Spiralspänen bei selten auftretenden Schrägwendelspänen (Klasse 4) erhalten werden. Das Verschleißbild des Schneideinsatzes sieht gleichmäßig aus. Hingegen zeigten nach dem Stand der Technik eingesetzte Schneideinsätze Spanlocken, Bröckelspäne (Klassen 9, 10 nach INFOS) und in vielen Fällen ungünstigere Schrägwendelspäne (Klasse 4).

In einem zweiten Versuch sind bei neuen Rädern folgende Einsatzbedingungen eingestellt worden:
Schnittiefe aₚ = 4 bis 5 mm
Vorschubgeschwindigkeit f = 1,2 bis 1,5 mm/U
Drehgeschwindigkeit v_{c} = 92 m/min
Eingriffszeit/Überlauf = 4,5 min

Die Räder besaßen eine Walzhaut und eine Unrundheit im ersten Schnitt und wurden trocken bearbeitet. Mit den Platten der Sorte CNMM nach der vorliegenden Erfindung konnten durchschnittliche Standzeiten pro Schneidkante von 60 Minuten und damit ca. 20 % bessere Standzeitverhalten als bei Schneideinsätzen nach dem Stand der Technik erreicht werden. Die Spanformen lagen in Klassen 6 bis 8 nach INFOS in allen Profilbereichen. Bei zunehmendem Vorschub konnte festgestellt werden, daß sowohl die Spankontrolle als auch das Schneidverhalten der erfindungsgemäßen Schneidplatte gegenüber nach dem Stand der Technik bekannten Schneidplatten deutlich besser wird.

Insgesamt zeichnen sich die erfindungsgemäßen Schneidplatten durch eine bessere Spankontrolle, insbesondere bei hohem Vorschub, eine höhere Standzeit, größere Produktionssicherheit bei einer Reduzierung der Bearbeitungszeit durch Vorschuberhöhung aus.

In einem weiteren Versuch wurden folgende Einsatzbedingungen gewählt:
Schnittiefe aₚ = 3 bis 5 mm
Vorschub f = 0,7 bis 0,9 mm/U
Drehgeschwindigkeit v_{c} = 51 m/min.

Es wurden ohne Kühlschmierung Räder mit einer Festigkeit von 880 bis 1100 N/mm² bearbeitet. Auch unter diesen Einsatzbedingungen war die erfindungsgemäße Schneidplatte den nach dem Stand der Technik bekannten Ausführungsformen überlegen.

## Patentansprüche

1. Vieleckiger Schneideinsatz zur spanbildenden Bearbeitung, dessen mindestens einseitige Deckfläche die Spanfläche (10) und dessen umlaufende Seitenflächen die Freiflächen (11) bilden, wobei die Spanfläche (10) einen zentralen, gegenüber der durch die Schneidkanten (12) definierten Ebene oder gegenüber einer sich an die Schneidkante (12) anschließenden ggf. darin angeordnete einzelne Erhebungen aufweisende Spanbrechernut (14) erhabenen Spanbrecher (13) besitzt, der in Form mindestens einer keilförmigen im Spanablaufbereich angeordneten Längsrippe (15) ausläuft,
**dadurch gekennzeichnet**,
daß zwischen und/oder seitlich der Längsrippen (15) muldenförmige Vertiefungen (56) und/oder erhabene Spanformelemente (60) vorgesehen sind, wobei die Vertiefungen eine Tiefe von 0,05 mm bis 0,4 mm aufweisen und eine Länge in einer Senkrechten zur Schneidkante gemessen, die 1/2 bis 3mal so groß wie die Breite der Vertiefungen ist, und die Höhe der erhabenen Spanformelemente 0,08 mm bis 0,3 mm beträgt und der Abstand der erhabenen Spanformelemente von der Schneidkante mindestens so groß wie deren Höhe ist.

2. Schneideinsatz nach Anspruch 1, dadurch gekennzeichnet, daß die muldenförmigen Vertiefungen (56) vorzugsweise pro Schneidecke zwei muldenförmige Vertiefungen und/oder die erhabenen Spanformelemente (60), die vorzugsweise tropfenförmig ausgebildet sind, weiterhin vorzugsweise mit auf die Schneidkante (12) gerichteten Spitzen der Spanformelemente (60) spiegelsymmetrisch zu einer Schneideckenwinkelhalbierenden (16) liegen.

3. Schneideinsatz nach Anspruch 1 oder 2, dadurch gekennzeichnet, daß in die Vertiefungen (56) jeweils eine Längsrippe (151, 152) mündet.

4. Schneideinsatz nach einem der Ansprüche 1 bis 3, dadurch gekennzeichnet, daß die Vertiefungen (56) eine Fase (55), die vorzugsweise negativ ist, und einen sich hieran anschließenden Spanbrecher (53) überlappen und/oder daß die Vertiefungen (56) die Schneidkante (12) durchbrechen.

5. Schneideinsatz nach einem der Ansprüche 1 bis 4, dadurch gekennzeichnet, daß die vordere zur Schneidkante gerichtete Kante der Vertiefungen (56) im wesentlichen über die gesamte Breite (58) der Vertiefung (56) parallel zur Schneidkante (12) verläuft.

6. Schneideinsatz nach einem der Ansprüche 1 bis 5, dadurch gekennzeichnet, daß vom Spanbrecher (13) zu den Schneidecken gegenüber dem Spanbrecher (13) leicht abfallend, aber gegenüber der hieran angrenzenden parallel zur Schneidkante (12) laufenden Nut (14) erhabene Spanflächenstücke (53) reichen, in denen die Längsrippen (15) und die Vertiefungen (56) oder Erhebungen (60) angeordnet sind, wobei vorzugsweise die Breite (58) der Vertiefungen 1/2 bis 3mal so groß wie der Abstand (57) der Vertiefungen zur auf die Spanbrechernut (14) abfallenden Flanke (54) ist.

7. Schneideinsatz nach einem der Ansprüche 1 bis 6, dadurch gekennzeichnet, daß die Höhe der Spanformelemente (60) 0,1 mm bis 0,2 mm oder 0,08 mm bis 0,12 mm beträgt.

8. Schneideinsatz nach einem der Ansprüche 1 bis 7, dadurch gekennzeichnet, daß der Abstand der Spanformelemente zur Schneidkante (12) 0,05 mm bis 1,5 mm, vorzugsweise 0,05 mm bis 0,5 mm, beträgt.

9. Schneideinsatz nach einem der Ansprüche 1 bis 8, dadurch gekennzeichnet, daß die Breite (63) der Spanformelemente (60) 0,2 mm bis 1,5 mm beträgt und/oder daß eine vorzugsweise negative Fase (55) vorgesehen ist.

10. Schneideinsatz nach einem der Ansprüche 1 bis 9, dadurch gekennzeichnet, daß der Freiwinkel 0° bis 30° beträgt.

## Claims

1. Polygonal cutting insert for chip-forming machining having at least one face formed as a cutting face (10) and having peripheral side faces forming clearance surfaces, the cutting face (10) having a central raised chip breaker (13) offset from a plane defined by the cutting edges (12) or from a chip breaker groove (14) formed along the cutting edges (12) and possibly having single raised portions arranged therein, the chip breaker (13) extending as at least one wedge-shaped longitudinal rib (15) in the chip removal region, characterised in that trough-shaped recesses (56) and/or raised chip shaping means (60) are arranged between and/or beside the longitudinal rib (15), whereby the recesses have a depth of 0.05 mm to 0.4 mm and a length measured in vertical direction to the cutting edge and being 1/2 to 3 times as great as the width of the recesses, and the height of the raised chip-shaping means is 0.08 mm to 0.3 mm and the distance of the raised chip - shaping means from the cutting edge is at least as great as their height.

2. Cutting insert according to claim 1, characterised in that the trough-shaped recesses (56), preferably two trough-shaped recesses per cutting edge and/or the raised chip-shaping means (60), which are formed preferably drop-shaped, furthermore preferably arranged symmetrically to a bisector (16) of the cutter corner and their tips directed to the cutting edge (12).

3. Cutting insert according to claim 1 or 2, characterised in that one longitudinal rib (151, 152) extending in each recess (56).

4. Cutting insert according to one of the claims 1 to 3, characterised in that the recesses (56) overlap a chamfer (55), being preferably negative, and a chip breaker joining thereto and/or that the recesses (56) interrupt the cutting edge (12).

5. Cutting insert according to one of claims 1 to 4, characterised in that the front edge of the recesses (56) directed to the cutting edge extends essentially over the whole width (58) of the recesses (56) and parallel to the cutting edge (12).

6. Cutting insert according to one of the claims 1 to 5, characterised in that cutting face pieces (53) extend from the chip breaker (13) to the cutter corners slightly descending in relation to the chip breaker (13), but raised in relation to the groove (14) running parallelly to the cutting edge (12) and bordering the chip breaker (13), longitudinal ribs (15) and the recesses (56) or raised means (60) being arranged in the cutting face pieces, whereby the width (58) of the recesses is preferably 1/2 to 3 times as great as the distance (57) of the recesses to the flank (54) descending in direction to the chip breaker groove (14).

7. Cutting insert according to one of the claims 1 to 6, characterised in that the height of the chip-shaping means (60) is 0.1 mm to 0.2 mm.

8. Cutting insert according to one of the claims 1 to 7, characterised in that the distance of the chip-shaping means to the cutting edge (12) is 0.05 mm to 1.5 mm, preferably 0.05 mm to 0.5 mm.

9. Cutting insert according to one of the claims 1 to 8, characterised in that the width (63) of the chip-shaping means (60) is 0.2 mm to 1.5 mm and/or that a preferably negative chamfer (55) exists.

10. Cutting insert according to one of the claims 1 to 9, characterised in that the clearance angle is 0° to 30°.

## Revendications

1. Insert de coupe polygonal pour l'usinage par enlèvement de copeaux, dont la surface extérieure au moins unilatérale forme la face de coupe (10) et dont les faces latérales périphériques forment les faces de dépouille (11), la face de coupe (10) possédant un brise-copeaux central (13) élevé par rapport au plan défini par les tranchants (12) ou par rapport à une rainure brise-copeaux (14) adjacente au tranchant (12), qui, le cas échéant, présente des élévations individuelles disposées là-dedans, ledit brise-copeaux se terminant sous forme d'au moins une nervure longitudinale (15) cunéiforme disposée dans la zone d'écoulement des copeaux,
**caractérisé par le fait**
que l'on prévoit des enfoncements (56) en forme de creux et/ou des éléments élevés (60) à former le copeau entre et/ou à côté des nervures longitudinales (15), les enfoncements présentant une profondeur comprise entre 0,05 mm et 0,4 mm et une longueur mesurée dans une direction verticale au tranchant, qui mesure entre 1/2 et 3 fois la largeur des enfoncements, et la hauteur des éléments élevés à former le copeau étant comprise entre 0,08 mm et 0,3 mm et la distance séparant les éléments élevés à former le copeau du tranchant étant au moins aussi grande que leur hauteur.

2. Insert de coupe selon la revendication 1, caractérisé par le fait que les enfoncements (56) en forme de creux, de préférence deux enfoncements en forme de creux par coin de coupe et/ou les éléments élevés (60) à former le copeau, qui, de préférence, présentent la forme de gouttes, sont disposés, également de préférence, de façon symétrique par rapport à une bissectrice (16) du coin de coupe, avec les pointes des éléments à former le copeau (60) dirigées vers le tranchant (12).

3. Insert de coupe selon la revendication 1 ou 2, caractérisé par le fait qu'une nervure longitudinale (151, 152) débouche respectivement dans un enfoncement (56).

4. Insert de coupe selon l'une des revendications 1 à 3, caractérisé par le fait que les enfoncements (56) chevauchent un chanfrein (55) qui est de préférence négatif, ainsi qu'un brise-copeaux (53) qui suit ce dernier, et/ou que les enfoncements (56) interrompent le tranchant (12).

5. Insert de coupe selon l'une des revendications 1 à 4, caractérisé par le fait que l'arête avant des enfoncements (56), qui est dirigée vers le tranchant, s'étend pour l'essentiel sur l'ensemble de la largeur (58) de l'enfoncement (56) et parallèlement au tranchant (12).

6. Insert de coupe selon l'une des revendications 1 à 5, caractérisé par le fait que des pièces (53) de la face de coupe, qui descendent légèrement par rapport au brise-copeaux (13), mais sont élevées par rapport à la rainure (14) adjacente au brise-copeaux et s'étendant parallèlement au tranchant (12), s'étendent du brise-copeaux (13) aux coins de coupe, et dans lesdites pièces (53) sont disposés les nervures longitudinales (15) et les enfoncements (56) ou élévations (60), la largeur (58) des enfoncements mesurant de préférence entre 1/2 et 3 fois la distance (57) séparant les enfoncements du flanc (54) descendant vers la rainure brise-copeaux (14).

7. Insert de coupe selon l'une des revendications 1 à 6, caractérisé par le fait que la hauteur des éléments à former le copeau (60) est comprise entre 0,1 mm et 0,2 mm ou entre 0,08 mm et 0,12 mm.

8. Insert de coupe selon l'une des revendications 1 à 7, caractérisé par le fait que la distance séparant les éléments à former le copeau du tranchant (12) est comprise entre 0,05 mm et 1,5 mm, de préférence entre 0,05 mm et 0,5 mm.

9. Insert de coupe selon l'une des revendications 1 à 8, caractérisé par le fait que la largeur (63) des éléments à former le copeau (60) est comprise entre 0,2 mm et 1,5 mm et/ou que l'on prévoit un chanfrein (55) de préférence négatif.

10. Insert de coupe selon l'une des revendications 1 à 9, caractérisé par le fait que l'angle de dépouille est compris entre 0° et 30°.
